# EUROPÄISCHE PATENTSCHRIFT

(11) **EP 0 786 379 B1**
(45) Veröffentlichungstag und Bekanntmachung des Hinweises auf die Patenterteilung: **09.06.1999**
(21) Anmeldenummer: 97100295.1
(22) Anmeldetag: 10.01.1997
(51) Int. Cl.: B60R 1/12, B60R 1/06

(54) **Aussenrückblickspiegel für Kraftfahrzeuge, insbesondere Nutzfahrzeuge**
External rear view mirror for vehicles, especially for trucks
Rétroviseur extérieur pour véhicule, en particulier pour véhicule commercial

(30) Priorität: 25.01.1996 DE 19602578
(43) Veröffentlichungstag der Anmeldung: 30.07.1997
(73) Patentinhaber: MEKRA Lang GmbH & Co. KG, D-90765 Fürth (DE)
(72) Erfinder: Lang, Heinrich, 91465 Ergersheim (DE); Seiboth, Wolfgang, 91438 Bad Windsheim (DE)
(74) Vertreter: Hübner, Gerd, Dipl.-Phys.

(56) Entgegenhaltungen:
- EP-A- 0 567 244
- WO-A-90/09041
- FR-A- 1 587 730
- GB-A- 820 162
- GB-A- 2 157 633
- US-A- 3 522 584

## Beschreibung

Die Erfindung betrifft einen Außenrückblickspiegel für Kraftfahrzeuge und insbesondere für Nutzfahrzeuge mit den im Oberbegriff des Anspruches 1 angegebenen Merkmalen.

Derartige Außenrückblickspiegel sind z.B. aus der DE-U-93 08 052.2 der DE-A-43 17 314 bekannt. Zentrales Rückgrat dieser Rückspiegeltypen ist eine Trägerplatte als tragendes Teil der Spiegelanordnung, die an einem Halter zur Befestigung des Spiegels an der Fahrzeugkarosserie angeordnet ist. Bei dem Spiegel gemäß der erstgenannten Gebrauchsmusterschrift sind die Trägerplatte und der Halter einstückig ausgebildet, wogegen bei dem Spiegel gemäß der vorgenannten Offenlegungsschrift die Trägerplatte über eine Klemmvorrichtung mit dem Halter verbunden ist. Die gegenseitige konstruktive Zuordnung von Trägerplatte und Halter ist jedoch nicht erfindungswesentlich.

Erwähnenswert jedoch ist, daß das an der Trägerplatte befestigte, am besten als "wannenförmig" zu beschreibende Gehäuse kein tragendes Teil der Spiegelanordnung, sondern lediglich ein unter aerodynamischen und Design-Gesichtspunkten wirkendes Blendenteil ist.

In der Offenseite des Gehäuses ist nun eine Spiegelscheibe angeordnet, die über ein geeignetes Verstellaggregat verschwenkbar an der Trägerplatte befestigt ist.

Eine bei Kraftfahrzeugen jeder Art grundsätzlich gegebene Problematik liegt darin, eine Antenne zum Empfang von Radioprogrammen, Mobilfunk, Navigationssignalen oder dergleichen unter verschiedensten Gesichtspunkten möglichst optimal am Fahrzeug anzubringen. Neben einer mechanischkonstruktiv möglichst einfachen, dabei aber sicheren Lagerung der Antenne sollte diese einerseits möglichst weit weg von Funkstörquellen im Fahrzeug, andererseuts möglichst nahe am Empfangs- bzw. Sendegerät angeordnet werden. Auch ist der Schutz gegen Beschädigungen beispielsweise beim Durchfahren von Waschanlagen oder durch Vandalismus zu beachten.

Zur Lösung der erörterten Problematik schlägt nun die Erfindung laut Kennzeichnungsteil des Anspruches 1 vor, die Fahrzeugantenne zum Empfang von Radio-, Mobilfunk-, Navigationssignalen oder dergleichen an der eingangs genannten Trägerplatte innerhalb des Spiegelgehäuses zu montieren. Die Trägerplatte stellt dabei eine von Haus aus sehr stabile Lagerung dar. Dabei ist zumindest der an der Trägerplatte sitzende Antennenfuß innerhalb des Spiegelgehäuses angeordnet und somit vor unbefugten Zugriffen geschützt. In funktechnischer Hinsicht ist die Anbringung am Spiegel ebenfalls vorteilhaft, da hier ein günstiger Kompromiß zwischen möglichst großem Abstand zu Störquellen und möglichst geringem Abstand zur Sende- bzw. Empfangsanlage erreicht wird.

Aus den Dokumenten WO-A-90 09 041 und US-A-3 522 584 ist es allgemein bekannt, Antennen an PKW-Rückspiegeln anzubringen, jedoch nicht wie bei der Erfindung die Antennen an der im Anspruch 1 definierten Halteplatte zu befestigen.

Weitere Merkmale, Einzelheiten und Vorteile der Erfindung sind den Unteransprüchen und der nachfolgenden Beschreibung entnehmbar, in der zwei Ausführungsbeispiele des Erfindungsgegenstandes anhand der beigefügten Zeichnungen näher erläutert werden. Es zeigen:

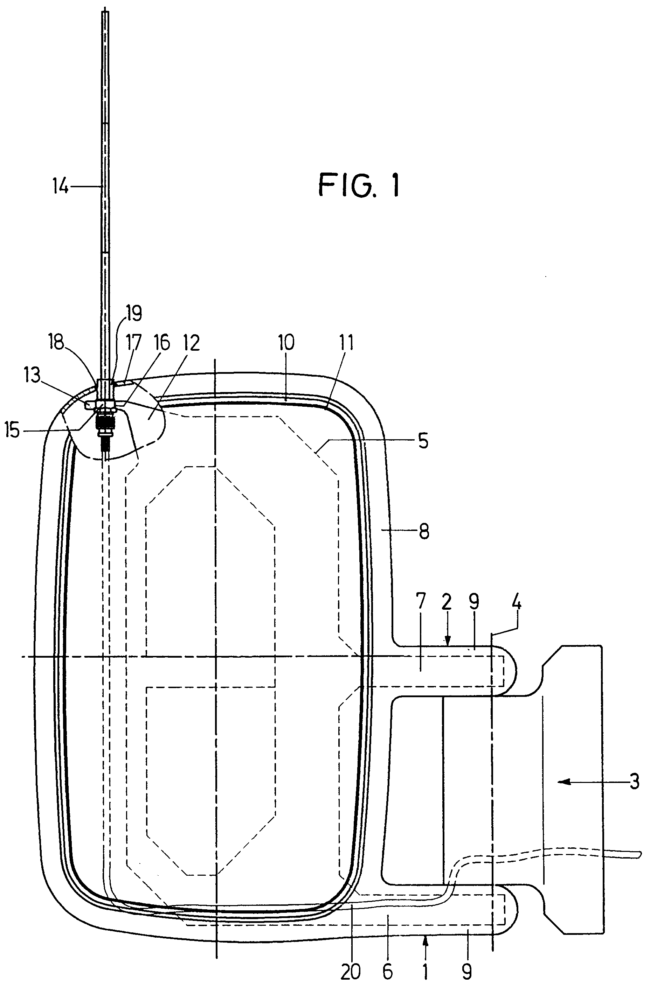

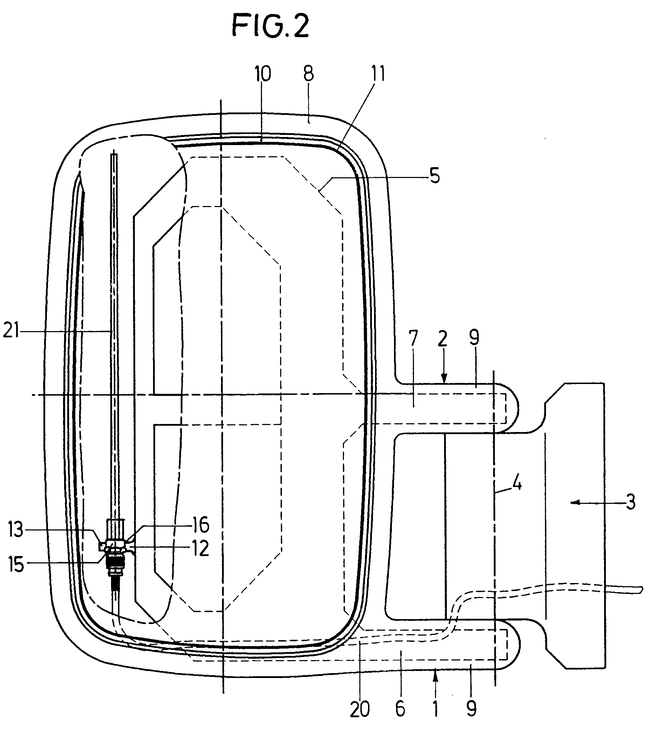

- Fig. 1 und 2: Spiegelansichten in teilweise weggebrochener Darstellung dieser beiden alternativen Ausführungsformen.

Grundsätzlich ist darauf hinzuweisen, daß der prinzipielle konstruktive Aufbau der beiden Spiegelvarianten gemäß Fig. 1 bzw. 2 dem in DE 93 08 052 U1 gezeigten Außenspiegel entspricht. Der Offenbarungsgehalt dieser Druckschrift wird im Wege der Referenznahme hier einbezogen. Zusammenfassend ist dazu festzuhalten, daß diese Spiegelkonstruktion einen durch zwei Haltearme 1, 2 gebildeten Halter zur Befestigung des Spiegels an einer karosserieseitigen Lagerbock 3 aufweist. Die Verbindung zwischen den beiden Haltearmen 1, 2 und den Lagerbock 3 erfolgt über eine Schwenklagerung 4. Der Spiegel weist ferner eine Trägerplatte 5 auf, an die einstückig zwei die tragenden Teile des Haltearme 1, 2 bildende Halteausleger 6, 7 angeformt sind. An der Trägerplatte 5 ist in nicht näher dargestellter Weise ein wannenförmiges Gehäuse 8 befestigt, das mit einstückig angeformten Blendenteilen 9 auch die Halteausleger 6, 7 umgibt.

In der Offenseite 10 des Gehäuses 8 sitzt eine Spiegelscheibe 11, die auf einer nicht näher dargestellten Spiegeltragplatte befestigt ist. Letztere ist über ein Schwenkaggregat mit der Trägerplatte 5 verbunden, so daß die Spiegelscheibe 11 innerhalb des Gehäuses verschwenkbar ist.

Wie in Fig. 1 nun detailliert erkennbar ist, weist die Trägerplatte 5 in ihrem oberen Randbereich einen nach außen abstehenden einstückig angeformten Lagerfortsatz 12 auf, der einen Lagerflansch 13 für eine Teleskopantenne 14 bildet. Der Lagerfortsatz 12 mit Lagerflansch 13 ist dabei innerhalb des Gehäuses 8 praktisch hinter der Spiegelscheibe 11 angeordnet. Der Fuß 15 der Teleskopantenne 14 ist in eine entsprechende Öffnung 16 im Lagerflansch 13 eingesteckt und über eine übliche Konterverschraubung gesichert. Vertikal oberhalb des Lagerflansches 13 weist die nach oben weisende Wand 17 des Gehäuses 8 eine Öffnung 18 auf, durch die die Teleskopantenne 14 mit ihrer feststehenden Schiebeführungshülse 19 hindurchragt. Bei Einschieben der Teleskopantenne 14 verschwindet diese im Inneren des Spiegelgehäuses 8 und ist damit im eingeschobenen Zustand vollständig geschützt.

Im übrigen ist ein Antennenkabel 20 vom Fuß 15 der Teleskopantenne 14 weggeführt, das innerhalb des Gehäuses 8 verlegt und über den unteren Haltearm 1 und den Lagerbock 3 unsichtbar in die Fahrzeugkarosserie geführt ist.

Eine Ausführungsform des Erfindungsgegenstandes, mit der ein besonders wirksamer Schutz der Antenne vor Beschädigung erzielt wird, ist in Fig. 2 dargestellt. Hier kommt eine sogenannte "Stummelantenne" 21 zum Einsatz, die vollständig innerhalb des Spiegelgehäuses hinter der Spiegelscheibe 11 angeordnet ist. Damit ist nach außen keinerlei Antennenteil erkennbar. Trotzdem sind hervorragende Empfangs- und Sendeeigenschaften gewährleistet, da das in der Regel aus Kunststoff bestehende Gehäuse 8 praktisch keine Abschirmungswirkung gegenüber elektromagnetischen Wellen zeigt.

Im einzelnen ist die Stummelantenne 21 mit ihrem Fuß 15 wiederum an einem einen Lagerflansch 13 bildenden Lagerfortsatz 12 befestigt, der nach außen von der Trägerplatte 5 absteht. Allerdings ist der Lagerfortsatz 12 hier am unteren Teil der Trägerplatte 5 einstückig an diese angeformt, so daß die Stummelantenne 21 knapp die Höhe der Trägerplatte 5 einnimmt. Auch bei der Ausführungsform gemäß Fig. 2 ist wiederum ein Antennenkabel 20 vom Antennenfuß 15 zur Karosserie vorgesehen, das innerhalb des Gehäuses 8, dessen Haltearm 1 und dem Lagerbock 3 geführt ist.

## Patentansprüche

1. Außenrückblickspiegel für Kraftfahrzeuge, insbesondere für Nutzfahrzeuge, mit
- einem Halter (1, 2) zur Befestigung des Spiegels an der Fahrzeugkarosserie,
- einer am Halter (1, 2) angeordneten Trägerplatte (5) als tragendes Teil der Spiegelanordnung,
- einem an der Trägerplatte (5) befestigten, im wesentlichen wannenförmigen Gehäuse (8) und
- einer an der Trägerplatte (5) verschwenkbar im Gehäuse (8) angeordneten Spiegelscheibe (11),
gekennzeichnet durch
eine an der Trägerplatte (5) montierte Fahrzeugantenne (14, 21) zum Empfang und/oder Senden von Radio-, Mobilfunk-, Navigationssignalen oder dergleichen.

2. Spiegel nach Anspruch 1, dadurch gekennzeichnet, daß der Fuß (15) der Antenne (14, 21) an einem einstückig die Trägerplatte (5) angeformten, nach außen davon (5) abstehenden Lagerfortsatz (12) befestigt ist.

3. Spiegel nach Anspruch 1 oder 2, dadurch gekennzeichnet, daß die Antenne als Stummelantenne (21) ausgebildet ist, die vollständig innerhalb des Spiegelgehäuses (8) angeordnet ist.

4. Spiegel nach Anspruch 1 oder 2, dadurch gekennzeichnet, daß die Antenne (14) über eine Öffnung im Spiegelgehäuse (8) nach außen ragt.

5. Spiegel nach Anspruch 4, dadurch gekennzeichnet, daß die Antenne eine Teleskopantenne (14) ist.

6. Spiegel nach Anspruch 2, dadurch gekennzeichnet, daß der Lagerfortsatz (12) am oberen Randbereich der Trägerplatte (5) angeformt ist.

7. Spiegel nach Anspruch 2, dadurch gekennzeichnet, daß der Lagerfortsatz (12) am unteren Teil der Trägerplatte (5) angeformt ist.

## Claims

1. An external rear-view mirror for motor vehicles, in particular utility vehicles, comprising
- a mounting (1, 2) for fastening the mirror to the vehicle body,
- a support plate (5) disposed on the mounting (1, 2) as a supporting member of the mirror arrangement,
- a substantially pan-shaped housing (8) fixed to the support plate (5),
- a mirror glass (11) pivotably disposed on the support plate (5) in the housing (8),
characterized by
a vehicle antenna (14, 21) mounted on the support plate (5) for the reception and/or transmission of radio, mobile radiotelephone, navigational signals or the like.

2. A mirror according to claim 1, characterized in that the base (15) of the antenna (14, 21) is fixed to a bearing extension (12), which is integrally formed on the support plate (5) and projects therefrom (5).

3. A mirror according to claim 1 or 2, characterized in that the antenna is a stub antenna (21), which is entirely disposed within the mirror housing (8).

4. A mirror according to claim 1 or 2, characterized in that the antenna (14) projects outwards through an opening in the mirror housing (8).

5. A mirror according to claim 4, characterized in that the antenna is a telescopic antenna (14).

6. A mirror according to claim 2, characterized in that the bearing extension (12) is formed on the upper edge portion of the support plate (5).

7. A mirror according to claim 2, characterized in that the bearing extension (12) is formed on the lower part of the support plate (5).

## Revendications

1. Rétroviseur extérieur pour véhicules, en particulier pour véhicules commerciaux, avec
- un manche (1, 2) pour la fixation du rétroviseur à la carrosserie,
- une plaque de support (5) disposée sur le manche (1, 2) comme élément porteur de l'arrangement du rétroviseur,
- un boîtier (8) essentiellement en cuvette qui est fixé à la plaque de support (5), et
- une glace (11) disposée sur la plaque de support (5) de façon pivotante dans le boîtier (8),
caractérisé par
une antenne de véhicule (14, 21) montée sur la plaque de support (5) pour la réception et/ou l'émission de signaux radio, radiotéléphoniques mobiles, de navigation ou analogue.

2. Rétroviseur selon la revendication 1, caractérisé en ce que le pied (15) de l'antenne (14, 21) est fixé à un prolongement en palier (12) qui est moulé de façon solidaire à la plaque de support (5) et en (5) fait saillie vers l'extérieur.

3. Rétroviseur selon la revendication 1 ou 2, caractérisé en ce que l'antenne est une antenne en tronçon (21) qui est disposée entièrement à l'intérieur du boîtier du rétroviseur (8).

4. Rétroviseur selon la revendication 1 ou 2, caractérisé en ce que l'antenne (14) fait saillie vers l'extérieur par une ouverture dans le boîtier du rétroviseur (8).

5. Rétroviseur selon la revendication 4, caractérisé en ce que l'antenne est une antenne téléscopique (14).

6. Rétroviseur selon la revendication 2, caractérisé en ce que le prolongement en palier (12) est moulé au bord supérieur de la plaque de support (5).

7. Rétroviseur selon la revendication 2, caractérisé en ce que le prolongement en palier (12) est moulé à la partie inférieure de la plaque de support (5).
